# EUROPEAN PATENT SPECIFICATION

(11) **EP 1 482 204 B1**
(45) Date of publication and mention of the grant of the patent: **16.08.2006**
(21) Application number: 04253112.9
(22) Date of filing: 27.05.2004
(51) Int. Cl.: F16D 69/02

(54) **Friction material**
Reibungsmaterial
Matériau tribologique

(30) Priority: 28.05.2003 JP 2003150562
(43) Date of publication of application: 01.12.2004
(73) Proprietor: Nisshinbo Industries, Inc., Chuo-ku, Tokyo (JP)
(72) Inventor: Suzuki, Seiji c/o Tatebayashi P, Nisshinbo Ind Inc, Gunma-ken (JP); Hattori, Yasuki c/o Tatebayashi P, Nisshinbo I Inc, Gunma-ken (JP); Yamamoto, Kazuhide, Tatebayashi P, Nisshinbo I Inc, Gunma-ken (JP)
(74) Representative: Stuart, Ian Alexander

(56) References cited:
- EP-A- 1 227 262
- US-A- 5 925 837
- US-B1- 6 228 815
- PATENT ABSTRACTS OF JAPAN vol. 0172, no. 74 (C-1064), 27 May 1993 (1993-05-27) & JP 5 009459 A (HITACHI CHEM CO LTD), 19 January 1993 (1993-01-19)

## Description

The present invention relates to friction materials which can be used in such applications as disk pads, brake linings and clutch facings for automobiles.

Friction materials used in automotive disk pads, brake linings and other similar applications generally include substances such as graphite and coke in order to improve wear resistance. In addition, lead and antimony compounds such as lead sulfide, antimony oxide and antimony sulfide are known to be effective for reducing mating surface attack due to scoring and other effects that arise at elevated temperatures. However, there is a growing tendency to avoid these lead and antimony compounds because of environmental concerns associated with their use.

The incorporation of metal sulfides as solid lubricants has also been described in the prior art, including JP-A 54-160, JP-A 54-109013, JP-A 4-311789, JP-A 7-83256, JP-B 8-26303, JP-A 10-511732, JP-A 2002-511517 and USP 6,228,815.

Yet, this prior art offers no effective solutions for minimization of mating surface attack. A desire thus exists for a way to minimize mating surface attack at both high loading times and low loading times.

A preferred embodiment of the present invention may provide a friction material which can offer low mating surface attack at both high loading times and low loading times.

_{EP}-A-1 227 262 discloses a non-asbestos friction material composition including tin and/or tin sulfide and a fibrous base, e.g. bronze fibers.

US-B- 6 228 815 discloses a friction material matrix which may include tin sulfide.

US-A-5 925 837 discloses friction materials containing tin.

JP05-009459 discloses bronze fibers for use in friction materials.

We have discovered that metal pickup and mating surface attack by the friction material can be effectively suppressed or significantly reduced during high loading and low loading by including in the friction material a specific amount of at least three substances of mutually differing melting points selected from metallic tin, tin alloys and tin compounds, and especially bronze fibers, tin sulfide and tin powder.

Accordingly, the invention provides a friction material made by molding and curing a composition that contains a fibrous base, a binder and a filler, which friction material includes at least three substances of mutually differing melting points selected from the group consisting of metallic tin, tin alloys and tin compounds in a combined amount of 5.5 to 17.5 vol%, said at least three substances comprising 4 to 10 vol% of bronze fibers, 0.5 to 2.5 vol% of tin sulfide and 1 to 5 vol% of metallic tin powder. The bronze fibers are of a type produced by a vibration cutting process. The tin sulfide is a mixture of at least two types of tin sulfide.

### DETAILED DESCRIPTION OF THE INVENTION

The friction material of the invention contains a fibrous base, a binder and a filler.

The fibrous base comprises bronze fibers and may include any type of organic fiber (e.g., aramid fibers) or inorganic fiber (e.g., glass fibers, rock wool, metal fibers such as iron or copper fibers) commonly used in friction materials. Any one or combination of two or more of these may be used.

The fibrous base is included in an amount of preferably up to 30 vol%, and more preferably 10 to 20 vol%, based on the overall friction material composition.

It is preferable for the fibrous base to have a fiber length of 2 to 3.5 mm and a fiber diameter of 60 to 120 µm.

The binder may be any known binder commonly used in friction materials. Illustrative examples of suitable binders include phenolic resins, melamine resins, epoxy resins; various modified phenolic resins such as epoxy-modified phenolic resins, oil-modified phenolic resins, alkylbenzene-modified phenolic resins and cashew-modified phenolic resins; and acrylonitrile-butadiene rubber (NBR). Any one or combinations of two or more of these may be used.

This binder is included in an amount of preferably 10 to 25 vol%, and more preferably 12 to 20 vol%, based on the overall friction material composition.

Illustrative examples of the filler include organic fillers such as various types of rubber powder (e.g., rubber dust, ground tire rubber), cashew dust and melamine dust; and inorganic fillers such as calcium carbonate, barium sulfate, magnesium oxide, graphite, calcium hydroxide, zirconium silicate, iron oxide, mica, zirconium oxide, metal powders, silicon oxide, alumina and vermiculite. Any one or combinations of two or more of these may be used.

These fillers are included in an amount of preferably 40 to 85 vol%, and more preferably 50 to 80 vol%, based on the overall friction material composition.

The friction material of the invention includes three or more substances of mutually differing melting points selected from the group consisting of metallic tin, tin alloys and tin compounds in a combined amount of 5.5 to 17.5 vol%, and preferably 7.5 to 15 vol%. Too small a combined amount of these three or more substances will not suffice to minimize metal pickup by the friction material, whereas too much will increase the cost of the friction material.

Specific examples of metallic tin that may be used include tin fibers and tin powder. Suitable examples of tin alloys include copper-tin bronzes and other alloys having a tin content of at least 6 wt%, and preferably at least 8 wt%. The tin alloy may be in the form of fibers or a powder. The tin compound may be a stannous compound or a stannic compound. Specific examples include SnS₂ and SnS. Tin substances in the form of fibers may be of the same size as indicated above for the fibrous base. Tin substances in the form of a powder may have an average particle size of preferably 3 to 20 µm, and more preferably 5 to 15 µm.

Of these substances, it is advantageous to use in combination the following three: moderate to high-melting bronze fibers and tin sulfide to minimize mating surface attack under high loading, and low-melting metallic tin powder to minimize mating surface attack under low loading. Too little of any of these substances may lower the metal pickup-minimization effect, whereas too much may increase costs and, particularly in the case of metallic tin powder, diminish the fade performance of the friction material.

The bronze fibers are produced by a vibration cutting process because such fibers have a uniform shape. The tin sulfide should be a mixture of two or more types of tin sulfide, and particularly a mixture of SnS₂ and SnS. One commercially available tin sulfide mixture of this type that may be used is Stannolube, which is a combination of SnS₂, SnS and graphite manufactured by CHEMETALL S.A.

The friction material of the invention is generally produced by uniformly blending specific amounts of the above-described fibrous base, binder and filler in a suitable mixer such as a Henschel mixer, Loedige mixer or Eirich mixer, and preforming the blend in a mold. The preform is then molded at a temperature of 130 to 180°C and a pressure of 150 to 500 kg/cm² (14.7 to 49 MPa) for a period of 3 to 10 minutes. The resulting molded article is typically postcured by heat treatment at 150 to 250°C for 2 to 10 hours, then spray-painted, baked and surface-ground as needed to give the finished article.

In the case of automotive disk pads and brake linings, production may be carried out by placing the preform on an iron or aluminum plate that has been pre-washed, surface-treated and coated with an adhesive, molding the preform in this state within a mold, and subsequently heat-treating, spray-painting, baking and surface-grinding.

The friction material of the invention can be used in such applications as disk pads, brake shoes and brake linings for automobiles, large trucks, railroad cars and various types of industrial machinery.

### EXAMPLES

Examples of the invention and comparative examples are given below by way of illustration and not by way of limitation.

### Examples 1 to 3, Comparative Examples C1 to C7

Friction material compositions formulated as shown in Tables 1 to 3 were uniformly blended in a Loedige mixer and preformed in a pressure mold under a pressure of 30 MPa for a period of 1 minute. The preforms were molded for 7 minutes at a molding temperature and pressure of 150°C and 40 MPa, then postcured by 5 hours of heat treatment at 220°C, yielding friction materials in the respective examples.

The rotor abrasion, bond strength and coefficient of friction for each of the resulting friction materials were evaluated as described below. The results are given in Tables 1 to 3.

### [Rotor Abrasion]

Testing was carried out in accordance with the general wear tests described in JASO C427 (the test conditions are shown below in Table 4). In the tests, the speed at the start of braking was set at 30 to 80 km/h, the braking deceleration was 2 m/s², the brake temperature prior to braking was from 50 to 200°C, and the number of braking cycles was 1,600. Rotor Abrasion was rated as follows, based on the average roughness Rz for measurements at ten points (according to JIS B0601) on the rotor surface following test completion.
- Good:: less than 45 µm
- Fair:: at least 45 µm but less than 60 µm
- Poor:: 60 µm or more

### [Bond Strength]

The bond strength per unit area was measured according to JIS D 4422.
- Good:: larger than 0.6 kN/cm²
- Fair:: larger than 0.5 kN/cm², but not more than 0.6 kN/cm²
- Poor:: 0.5 kN/cm² or less

### [Friction Coefficient]

The average friction coefficient in the second effectiveness test conducted as described in JASO C406 was rated as follows.
- Good:: Larger than 0.37
- Fair:: Larger than 0.32, but not more than 0.37
- Poor:: 0.32 or less

**Table 1**

| Ingredients (volume %) | Example | | |
|---|---|---|---|
| | 1 | 2 | 3 |
| Stainless steel fibers | 5.0 | 5.0 | 9.5 |
| Bronze fibers | 9.0 | 4.5 | 4.5 |
| Copper fibers | 0.0 | 0.0 | 0.0 |
| Brass fibers | 0.0 | 0.0 | 0.0 |
| Atomized tin powder | 3.0 | 3.0 | 3.0 |
| Tin sulfide powder | 1.5 | 1.5 | 1.5 |
| Aramid fibers | 3.0 | 3.0 | 3.0 |
| Slaked lime | 3.0 | 3.0 | 3.0 |
| Barium sulfate | 24.0 | 28.5 | 24.0 |
| Vermiculite | 10.0 | 10.0 | 10.0 |
| Graphite | 9.0 | 9.0 | 9.0 |
| Molybdenum disulfide | 1.5 | 1.5 | 1.5 |
| Iron sulfide | 5.0 | 5.0 | 5.0 |
| Phenolic resin | 15.0 | 15.0 | 15.0 |
| Cashew dust | 7.0 | 7.0 | 7.0 |
| Rubber | 3.0 | 3.0 | 3.0 |
| Alumina powder | 1.0 | 1.0 | 1.0 |
| Total | 100.0 | 100.0 | 100.0 |
| Rotor abrasion | good | fair | fair |
| Bond strength | good | fair | good |
| Friction coefficient | good | good | good |

**Table 2**

| Ingredients (volume %) | Comparative Example | | | |
|---|---|---|---|---|
| | C1 | C2 | C3 | C4 |
| Stainless steel fibers | 5.0 | 5.0 | 5.0 | 5.0 |
| Bronze fibers | 0.0 | 0.0 | 9.0 | 9.0 |
| Copper fibers | 9.0 | 0.0 | 0.0 | 0.0 |
| Brass fibers | 0.0 | 9.0 | 0.0 | 0.0 |
| Atomized tin powder | 3.0 | 3.0 | 0.0 | 0.0 |
| Tin sulfide powder | 1.5 | 1.5 | 1.5 | 4.5 |
| Aramid fibers | 3.0 | 3.0 | 3.0 | 3.0 |
| Slaked lime | 3.0 | 3.0 | 3.0 | 3.0 |
| Barium sulfate | 24.0 | 24.0 | 27.0 | 24.0 |
| Vermiculite | 10.0 | 10.0 | 10.0 | 10.0 |
| Graphite | 9.0 | 9.0 | 9.0 | 9.0 |
| Molybdenum disulfide | 1.5 | 1.5 | 1.5 | 1.5 |
| Iron sulfide | 5.0 | 5.0 | 5.0 | 5.0 |
| Phenolic resin | 15.0 | 15.0 | 15.0 | 15.0 |
| Cashew dust | 7.0 | 7.0 | 7.0 | 7.0 |
| Rubber | 3.0 | 3.0 | 3.0 | 3.0 |
| Alumina powder | 1.0 | 1.0 | 1.0 | 1.0 |
| Total | 100.0 | 100.0 | 100.0 | 100.0 |
| Rotor abrasion | poor | poor | poor | fair |
| Bond strength | good | good | good | good |
| Friction coefficient | good | good | good | poor |

**Table 3**

| Ingredients (volume %) | Comparative Example | | |
|---|---|---|---|
| | C5 | C6 | C7 |
| Stainless steel fibers | 5.0 | 5.0 | 5.0 |
| Bronze fibers | 9.0 | 9.0 | 9.0 |
| Copper fibers | 0.0 | 0.0 | 0.0 |
| Brass fibers | 0.0 | 0.0 | 0.0 |
| Atomized tin powder | 3.0 | 3.0 | 3.0 |
| Tin sulfide powder | 0.0 | 0.0 | 0.0 |
| Aramid fibers | 3.0 | 3.0 | 3.0 |
| Slaked lime | 3.0 | 3.0 | 3.0 |
| Barium sulfate | 25.5 | 24.0 | 24.0 |
| Vermiculite | 10.0 | 10.0 | 10.0 |
| Graphite | 9.0 | 10.5 | 9.0 |
| Molybdenum disulfide | 1.5 | 1.5 | 3.0 |
| Iron sulfide | 5.0 | 5.0 | 5.0 |
| Phenolic resin | 15.0 | 15.0 | 15.0 |
| Cashew dust | 7.0 | 7.0 | 7.0 |
| Rubber | 3.0 | 3.0 | 3.0 |
| Alumina powder | 1.0 | 1.0 | 1.0 |
| Total | 100.0 | 100.0 | 100.0 |
| Rotor abrasion | poor | poor | poor |
| Bond strength | good | good | good |
| Friction coefficient | good | good | good |

| | | | |
|---|---|---|---|
| Bronze fibers: Produced by a vibration cutting process. Length, 2.2 mm. Diameter, 95 µm. Melting point, 934°C. | | | |
| Tin sulfide powder: Stannolube (produced by CHEMETALL S.A.; SnS₂ + SnS + graphite). Particle size, 10 µm. Melting point, 860° C. | | | |
| Atomized tin powder: Average particle size, 15 µm. Melting point, 232° C | | | |

**Table 4 Rotor Abrasion Test Conditions**

| No. | Test | Speed at start of braking (km/h) | Braking deceleration (m/s²) (m/s²) | Brake temperature before braking (°C) | Number of braking cycles |
|---|---|---|---|---|---|
| 1 | Breaking in* | 50 | 2.9 | 100 | 200 |
| 2 | Wear test 1 | 30 | 2 | 50 | 100 cycles each time Total of 7×100 = 700 cycles |
| | | | | 100 | |
| | | | | 150 | |
| | | | | 200 | |
| | | | | 150 | |
| | | | | 100 | |
| | | | | 50 | |
| 3 | Wear test 2 | 50 | 2 | 50 | 100 cycles each time Total of 5×100 = 500 cycles |
| | | | | 100 | |
| | | | | 200 | |
| | | | | 100 | |
| | | | | 50 | |
| 4 | Wear test 3 | 80 | 2 | 100 | 100 cycles each time Total of 2×100 = 200 cycles |
| | | | | 200 | |

| | | | | | |
|---|---|---|---|---|---|
| *In accordance with wear test described in JASO C427-88. | | | | | |

As is apparent from the foregoing results, the friction materials of the invention greatly diminish mating surface attack.

## Claims

1. A friction material made by molding and curing a composition comprising a fibrous base, a binder and a filler, which friction material includes at least three substances of mutually differing melting points selected from the group consisting of metallic tin, tin alloys and tin compounds in a combined amount of 5.5 to 17.5 vol%, said at least three substances comprising 4 to 10 vol% of bronze fibers produced by a vibration cutting process, 0.5 to 2.5 vol% of a mixture of at least two types of tin sulfide and 1 to 5 vol% of metallic tin powder.

2. A friction material according to claim 1 wherein said composition contains 10-20 vol% of fibrous base.

3. A friction material according to claim 1 or claim 2 wherein said fibrous base has a fiber length of 2 to 3.5mm and a fiber diameter of 60 to 120µm.

4. A friction material according to any preceding claim wherein the binder comprises one or more selected from optionally modified phenolic resins, melamine resins, epoxy resins and acrylonitrile-butadiene rubber (NBR).

5. A friction material according to claim 4 wherein said binder comprises a modified phenolic resin selected from epoxy-modified phenolic resins, oil-modified phenolic resins, alkylbenzene-modified phenolic resins and cashew-modified phenolic resins.

6. A process of making a friction material as defined in any preceding claim comprising producing said composition by uniformly blending components comprising said fibrous base, binder and filler; and then molding and curing said composition.

## Patentansprüche

1. Reibungsmaterial, hergestellt durch Formen und Härten einer Zusammensetzung, die eine Faserbasis, ein Bindemittel und einen Füllstoff umfasst, wobei das Reibungsmaterial zumindest drei Substanzen mit unterschiedlichen Schmelzpunkten, die aus der aus metallischem Zinn, Zinnlegierungen und Zinnverbindungen bestehenden Gruppe ausgewählt sind, in einer gemeinsamen Menge von 5,5 bis 17,5 Vol.-% umfasst, wobei die zumindest drei Substanzen 4 bis 10 Vol.-% durch ein Vibrationsschneideverfahren hergestellte Bronzefasern, 0,5 bis 2,5 Vol.-% eines Gemischs aus zumindest zwei Arten Zinnsulfid und 1 bis 5 Vol.% metallisches Zinnpulver umfassen.

2. Reibungsmaterial nach Anspruch 1, worin die Zusammensetzung 10-20 Vol.-% Faserbasis enthält.

3. Reibungsmaterial nach Anspruch 1 oder Anspruch 2, worin die Faserbasis eine Faserlänge von 2 bis 3,5 mm und einen Faserdurchmesser von 60 bis 120 µm aufweist.

4. Reibungsmaterial nach einem der vorangegangenen Ansprüche, worin das Bindemittel eines oder mehrere aus gegebenenfalls modifizierten Phenolharzen, Melaminharzen, Epoxidharzen und Acrylnitril-Butadien-Kautschuk (NBR) umfasst.

5. Reibungsmaterial nach Anspruch 4, worin das Bindemittel ein modifiziertes Phenolharz umfasst, das aus epoxidmodifizierten Phenolharzen, ölmodifizierten Phenolharzen, alkylbenzolmodifizierten Phenolharzen und cashewmodifizierten Phenolharzen ausgewählt ist.

6. Verfahren zur Herstellung eines Reibungsmaterials nach einem der vorangegangenen Ansprüche, umfassend das Herstellen der Zusammensetzung durch gleichmäßiges Vermischen von Komponenten, welche die Faserbasis, ein Bindemittel und einen Füllstoff umfassen, und dann das Formen und Härten der Zusammensetzung.

## Revendications

1. Matériau de friction fait en moulant et en durcissant une composition comprenant une base fibreuse, un liant et une charge, lequel matériau de friction comprend au moins trois substances ayant des points de fusion mutuellement différents, sélectionnées dans le groupe consistant en étain métallique, alliages d'étain et composés d'étain en une quantité combinée de 5,5 à 17,5% en volume, lesdites au moins trois substances comprenant 4 à 10% en volume de fibres de bronze produites par un procédé de coupe par vibration, 0,5 à 2,5% en volume d'un mélange d'au moins deux types de sulfure d'étain, et 1 à 5% en volume de poudre d'étain métallique.

2. Matériau de friction selon la revendication 1 où ladite composition contient 10 -20% en volume d'une base fibreuse.

3. Matériau de friction selon la revendication 1 ou la revendication 2 où ladite base fibreuse a une longueur de fibres de 2 à 3,5mm et un diamètre de fibres de 60 à 120pm.

4. Matériau de friction selon toute revendication précédente où le liant comprend un ou plusieurs sélectionnés parmi des résines phénoliques facultativement modifiées, des résines mélamines, des résines époxy et du caoutchouc d'acrylonitrile-butadiène (NBR).

5. Matériau de friction selon la revendication 4 où ledit liant comprend une résine phénolique modifiée sélectionnée parmi des résines phénoliques époxy modifiées, des résines phénoliques modifiées par une huile, des résines phénoliques modifiées par de l'alkylbenzène et des résines phénoliques modifiées par du cachou.

6. Procédé de production d'un matériau de friction tel que défini dans l'une quelconque des revendications précédentes, consistant à produire ladite composition en mélangeant uniformément les composants comprenant ladite base fibreuse, le liant et la charge; puis à mouler et à durcir ladite composition.
